# FASCICULE DE BREVET EUROPEEN

(11) **EP 0 394 397 B1**
(45) Date de publication et mention de la délivrance du brevet: **01.03.1995**
(21) Numéro de dépôt: 89910873.2
(22) Date de dépôt: 14.09.1989
(51) Int. Cl.: H05B 6/78, H05B 6/72, B29C 35/10

(54) **DISPOSITIF DE COUPLAGE D'ENERGIE**
LEISTUNGSKOPPLUNGSGERÄT
ENERGY-COUPLING DEVICE

(30) Priorité: 15.09.1988 FR 8812057
(43) Date de publication de la demande: 31.10.1990
(73) Titulaire: Soulier, Joel Henri Auguste, F-28260 La Chaussée d'Ivry (FR)
(72) Inventeur: Soulier, Joel Henri Auguste, F-28260 La Chaussée d'Ivry (FR)
(74) Mandataire: Boivin, Claude
(86) Numéro de dépôt international: FR8900467
(87) Numéro de publication internationale: WO9003093

(56) Documents cités:
- EP-A- 0 229 708
- FR-A- 1 483 607
- FR-A- 2 412 221
- GB-A- 1 367 464

## Description

La présente invention concerne un dispositif de couplage d'énergie électro-magnétique sur un matériau absorbant et circulant sous pression dans une enceinte métallique quelconque.

Dans les applications de chauffage par micro-ondes, on utilise en combinaison :
- une source généralement un magnétron,
- une ligne de tramsmission généralement un guide d'onde ou un coaxial,
- un applicateur qui assure le transfert d'énergie entre la source de micro-ondes et le matériau à chauffer.

Les applicateurs existants sont regroupés en quatre types principaux :
- applicateurs à cavité mono ou multi-modes qui sont utilisés pour les applications domestiques ou industrielles. - applicateurs à ondes progressives, dans lesquels le matériau à chauffer traverse un guide d'ondes généralement de section rectangulaire.
- applicateurs à ondes progressives, dont le couplage d'énergie avec le produit est effectué par des fentes (cf. brevets US 3,783,221 & 3,784,777).
- applicateurs à ondes lentes, dans lesquels le matériau à chauffer se déplace à proximité d'une ligne de propagation ouverte interagissant avec le champ électrique extérieur innomogène de la ligne.

Il est déjà connu d'utiliser le chauffage micro-ondes dans une extrudeuse (cf. brevets US 4,003,554 et FR 2 298 571).

L'utilisation d'un applicateur du type ligne de propagation ouverte peut résoudre en partie les inconvénients cités (cf. description d'un tel applicateur dans "Journal of Microwave power" 10 (1) 1975 et brevet FR 83 05428) mais ne permettent pas compte tenu de la très forte atténuation du champ électro-magnétique à proximité de l'interface du produit avec l'applicateur, d'obtenir une répartition homogène du chauffage dans le volume du produit.

On connaît des appareils de chauffage par micro-ondes comportant une cavité annulaire, un guide d'onde coaxial à la cavité et des fentes de couplage entre le guide d'onde et la cavité annulaire. Un appareil de chauffage de ce genre est décrit dans le document GB-A- 1 367 464. Mais cet appareil connu, dans lequel le produit à chauffer traverse toute la surface intérieure de la cavité, présente l'inconvénient d'assurer un chauffage irrégulier.

La présente invention a pour objet un appareil de chauffage par micro-ondes d'un produit absorbant circulant sans pression dans une enceinte métallique quelconque qui remédie à cet inconvénient.

Cet appareil est caractérisé en ce que des structures en ferrite polarisées magnétiquement sont disposées dans la cavité, entre les fentes de couplage.

Grâce à cette disposition, l'énergie distribuée par le guide d'onde sur la cavité est directive et dosée et les structures en ferrite disposées dans la cavité évitent la formation d'ondes stationnaires par résonance évitant la création de gradiants de température importants. En outre, les champs électriques restent en mode de surface et donc n'induisent pas de courant à proximité des parois métalliques.

De préférence, la cavité est pleine et constitue ainsi une cavité diélectrique.

L'invention sera mieux comprise à l'aide du complément de description qui va suivre qui se réfère aux dessins dans lesquels :
- La figure 1a représente l'applicateur vu de face.
- La figure 1b représente une coupe transversale de la figure 1a, selon l'invention, comportant la source, le guide métallique, la cavité diélectrique toroïdale.
- La figure 2 coupe transversale de l'ensemble de l'applicateur avec un cylindre métallique coaxial destiné à réduire l'épaisseur de la matière à chauffer quant les pertes diélectriques sont très élevées.
- La figure 3 représente une coupe transversale d'un applicateur comportant deux cavités diélectriques juxtaposées, toroïdales dont l'une est coaxiale avec un cylindre métallique.
- La figure 4 représente un élément de couplage entre le guide métallique et la cavité diélectrique en combinaison avec la structure ferrite.
- La figure 5 représente le dispositif ponctuel de refroidissement de la structure aimants ferrite par un élément caloduc.
- La figure 6 représente l'applicateur incorporé dans une tête d'extrudeuse.

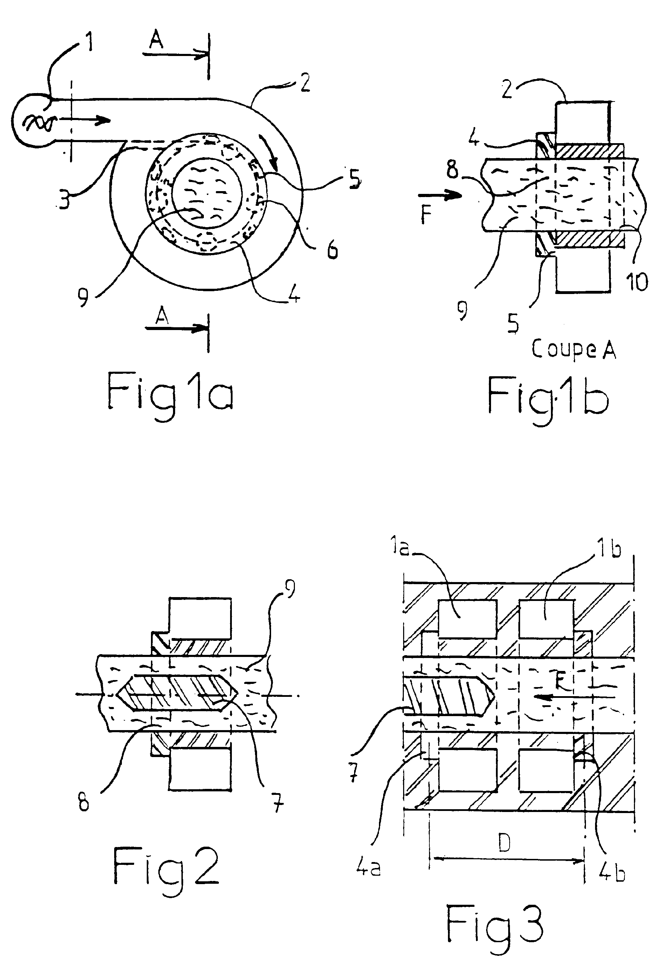

L'ensemble de l'applicateur représenté sur la figure 1a comprend : la source d'énergie micro-ondes 1. Le guide d'onde métallique 2, avec un court circuit 3, la cavité diélectrique 4, ainsi que les fentes de couplage 5, entre chaque fente une structure en matériau ferrite 6, constitue l'élément anti-résonant.

La figure 1b représente une coupe transversale de la figure 1a. La section du guide métallique 2, avec la cavité toroïdale 4, les fentes de couplages 5 et la zone d'interaction du champ électrique de surface 8 avec le produit à chauffer 9, qui s'écoule suivant la flèche F et limité par la surface cylindrique 10.

La figure 2 représente l'applicateur en coupe transversale selon l'invention avec un cylindre métallique coaxial 7, destiné à former un tube de matière à chauffer 9, dans la zone d'interaction 8.

La figure 3 représente un exemple d'application avec deux sources micro-ondes distinctes, 1a et 1b, la distance D, séparant les deux cavités diélectriques 4a et 4b n'est pas critique, elle peut être inférieure à une longueur d'onde. La matière à chauffer s'écoule suivant F.

La cavité diélectrique 4a est coaxiale avec un cylindre métallique 7.

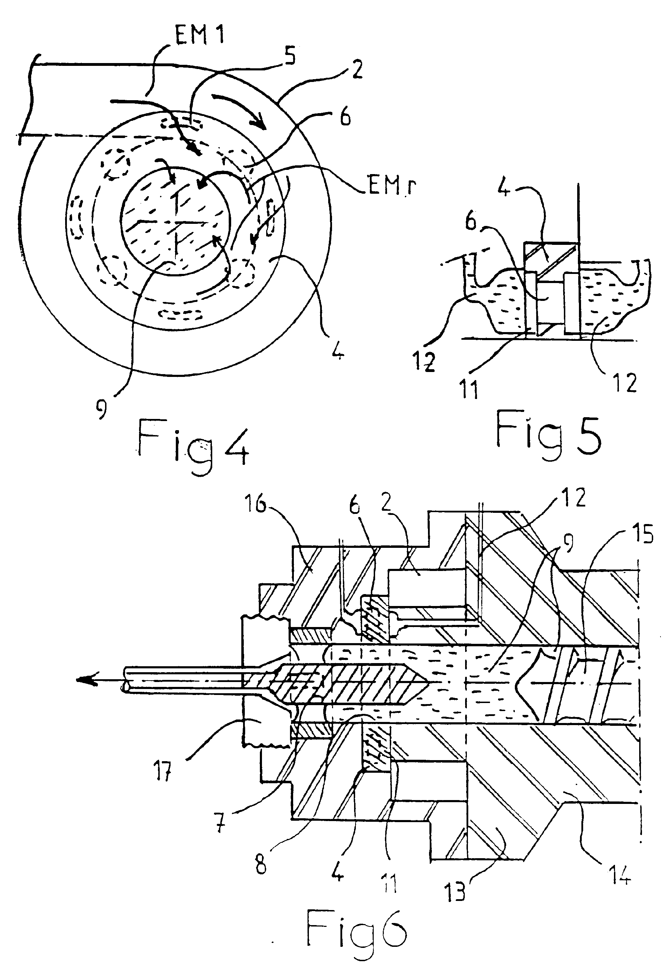

La figure 4 représente la fente de couplage directif 5, mettant en communication le champ Electro-Magnétique 1, du guide métallique 2, avec la cavité diélectrique 4, une structure ferrite 6 dévie l'onde réfléchie EMR sur le produit à chauffer 9.

La figure 5 représente le refroidissement des structures aimants 11, ferrites 6, par des caloducs 12.

La figure 6 représente en coupe l'applicateur incorporé dans une extrudeuse 14, dont la vis 15, pousse la matière à chauffer 9 dans la zone d'interaction 8, conformée en tube par le poinçon métallique coaxial 7; le guide d'onde métallique 2 est constitué par la partie 13 de l'extrudeuse et de la tête 16, la cavité toroïdale 4 est assemblée et maintenue entre les pièces 13 et 16; la matière chauffée après son passage dans la zone d'interaction 8, est mise en forme par la filière 17.

Les ferrites 6, avec leurs aimants 11 sont refroidis par les caloduc 12.

## Revendications

1. Appareil de chauffage par micro-ondes comprenant au moins une cavité annulaire (4), un guide d'onde (2) coaxial à la cavité (4), et des fentes de couplage (5) entre le guide d'onde (2) et la cavité annulaire (4),
caractérisé en ce que des structures en ferrite (6) polarisées magnétiquement sont disposées dans la cavité (4), entre les fentes de couplage (5).

2. Appareil selon la revendication 1,
caractérisé en ce que la cavité (4) est pleine.

3. Appareil selon la revendication 1 ou 2,
caractérisé en ce que les structures en ferrite (6) sont constituées par des disques.

4. Appareil selon l'une des revendications 1 à 3,
caractérisé en ce que les structures en ferrite (6) sont polarisées dans le sens de l'axe de l'appareil.

5. Appareil selon l'une des revendications 1 à 4,
caractérisé par des caloducs (12) refroidissant les structures de ferrite (6).

6. Appareil selon l'une des revendications 1 à 5,
caractérisé en ce qu'il comporte plusieurs cavités annulaires coaxiales juxtaposées.

7. Appareil selon l'une des revendications 1 à 6,
caractérisé en ce que le guide d'onde (2) est délimité par deux pièces (13 et 16) d'une tête d'extrudeuse.

## Patentansprüche

1. Gerät zum Erhitzen mit Mikrowellen mit mindestens einer ringförmigen Vertiefung (4), einem achssymmetrisch zur Vertiefung (4) verlaufenden Wellenleiter (2) sowie Kopplungsspalten (5) zwischen dem Wellenleiter (2) und der ringförmigen Vertiefung (4), dadurch gekennzeichnet, daß in der ringförmigen Vertiefung (4) zwischen den Kopplungsspalten (5) magnetisch polarisierte Strukturen aus Ferrit (6) angeordnet sind.

2. Gerät nach Patentanspruch 1, dadurch gekennzeichnet, daß die Vertiefung (4) ausgefüllt ist.

3. Gerät nach Patentanspruch 1 und 2, dadurch gekennzeichnet, daß die Strukturen aus Ferrit (6) aus Scheiben gebildet werden.

4. Gerät nach Patentanspruch 1 bis 3, dadurch gekennzeichnet, daß die Strukturen aus Ferrit (6) in Achsrichtung des Gerätes polarisiert sind.

5. Gerät nach Patentanspruch 1 bis 4, dadurch gekennzeichnet, daß die Strukturen aus Ferrit (6) mit Wärmeleitern (12) gekühlt werden.

6. Gerät nach Patentanspruch 1 bis 5, dadurch gekennzeichnet, daß es mehrere achssymmetrisch angeordnete, einander gegenüberliegende ringförmige Vertiefungen besitzt.

7. Gerät nach Patentanspruch 1 bis 6, dadurch gekennzeichnet, daß der Wellenleiter (2) durch zwei Bauteile (13 und 16) einer Strangpresse begrenzt ist.

## Claims

1. Microwave heating device including at least one annular cavity (4), a waveguide (2) coaxial to the cavity (4) and coupling apertures (5) disposed between the waveguide (2) and the annular cavity (4), wherein magnetically polarized ferrite structures (6) are disposed in the cavity (4) between the coupling apertures (5).

2. Device according to claim 1, wherein the cavity (4) is full.

3. Device according to claim 1 or 2, wherein the ferrite structures are constituted by disks.

4. Device according to any one of claims 1 to 3, wherein the ferrite structures are polarized in the direction of the axis of the device.

5. Device according to any one of claims 1 to 4 and characterized by calorie ducts (12) cooling the ferrite structures.

6. Device according to any one of claims 1 to 5, wherein it comprises several juxtaposed coaxial annular cavities.

7. Device according to any one claims 1 to 6, wherein the waveguide (2) is delimited by two parts (13 and 16) of an extruder head.
